# EUROPEAN PATENT APPLICATION

(11) **EP 4 503 163 A1**
(43) Date of publication of application: **05.02.2025**
(21) Application number: 22935133.3
(22) Date of filing: 29.03.2022
(51) Int. Cl.: H01M 4/13, H01M 4/70

(54) **ELECTRODE BODY AND POWER STORAGE ELEMENT**

(71) Applicant: Kyocera Corporation, Kyoto-shi, Kyoto 612-8501 (JP)
(72) Inventor: KATO, Wataru, Kyoto-shi, Kyoto 612-8501 (JP); MURAMOTO, Kazuya, Kyoto-shi, Kyoto 612-8501 (JP)
(74) Representative: TBK
(86) International application number: PCT/JP2022/015440
(87) International publication number: WO 2023/187982

(57) **Abstract**

An electrode body (14) includes an active material layer including an electrode active material and an electrolytic solution, an electrode conductor (12a) including (i) a first region (121) where the active material layer is located and (ii) a second region (122) being a region different from the first region and being a region to which a connection terminal can be electrically connected, and a resistance portion (123) of the electrode conductor, the resistance portion (123) being located closer to a side of the second region than the first region, the resistance portion exhibiting a higher resistance than the first region with respect to movement of the electrolytic solution along a surface of the electrode conductor.

## Description

### TECHNICAL FIELD

The present disclosure relates to an electrode body and a power storage element including the electrode body.

### BACKGROUND OF INVENTION

Patent document 1 discloses an example of an electrochemical cell. The electrochemical cell includes (i) a first current collector coupled to a first portion of a pouch and (ii) a second current collector coupled to a second portion of the pouch. A first electrode material is disposed on the first current collector. A second electrode material is disposed on the second current collector. The electrochemical cell further includes a separator disposed between the first electrode material and the second electrode material.

### CITATION LIST

### PATENT LITERATURE

Patent Document 1: US2019/0326562

### SUMMARY

An electrode body according to an aspect of the present disclosure includes an active material layer including an electrode active material and an electrolytic solution, an electrode conductor including (i) a first region where the active material layer is located and (ii) a second region being a region different from the first region and being a region to which a connection terminal can be electrically connected, and a resistance portion of the electrode conductor, the resistance portion being located closer to a side of the second region than the first region, the resistance portion exhibiting a higher resistance than the first region with respect to movement of the electrolytic solution along a surface of the electrode conductor on a side where the active material layer is located.

### BRIEF DESCRIPTION OF THE DRAWINGS

FIG. 1 is a perspective view illustrating an appearance of a secondary battery according to the present disclosure.
FIG. 2 is a perspective view illustrating an appearance of a unit cell according to the present disclosure.
FIG. 3 is an exploded model view illustrating a cross section taken along line III-III of FIG. 1.
FIG. 4 is an exploded model view illustrating a cross section taken along line IV-IV of FIG. 1.
FIG. 5 is a model view illustrating a specific structure of an electrode body.
FIG. 6 is a plan view illustrating a structure in the vicinity of an exposed portion of a negative electrode included in the electrode body according to the present disclosure.
FIG. 7 is a view illustrating movement of an electrolytic solution in an electrode conductor of a negative electrode not including a resistance portion.
FIG. 8 is a view illustrating an example of a cross section of an electrode conductor included in the negative electrode according to the present disclosure.
FIG. 9 is a cross-sectional view schematically illustrating a resistance portion according to a first variation.
FIG. 10 is a cross-sectional view schematically illustrating a resistance portion according to a second variation.
FIG. 11 is a plan view illustrating a variation of a unit cell included in the negative electrode according to the present disclosure.

### DESCRIPTION OF EMBODIMENTS

### Configuration of Secondary Battery

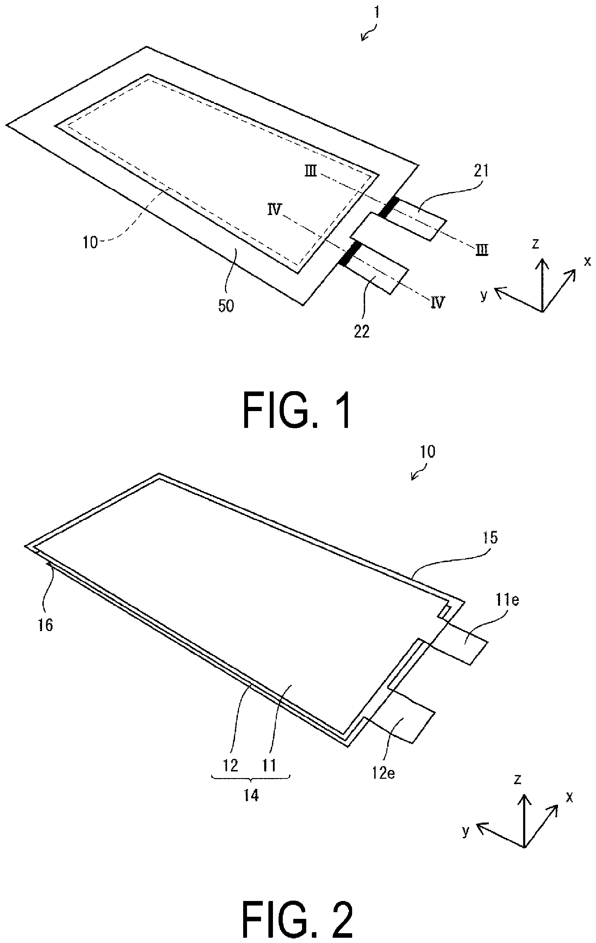

FIG. 1 is a perspective view illustrating an appearance of a secondary battery 1. The secondary battery 1 is a cell that can be charged or discharged by being electrically connected to an external terminal. For example, at least one secondary battery 1 may be mounted on a power storage device for houses, base stations, vehicles, robots such as drones, or medical devices. The secondary battery 1 may include a unit cell 10 (power storage element), connection terminals 21 and 22, and a second housing body 50. The configuration of the unit cell 10 is described below.

The second housing body 50 may house the unit cell 10. The second housing body 50 may be made of, for example, an aluminum pouch film or a laminate film having a metal foil layer of stainless steel, nickel, or the like. The aluminum pouch film may be a film on which aluminum is vapor-deposited, or a laminate of an aluminum foil and a film. The material of the film may be, for example, polypropylene, polyethylene, nylon, or polyethylene terephthalate. The second housing body 50 may have a thickness from 50 µm to 300 µm, and a thickness of 200 µm, for example.

When the second housing body 50 is an aluminum pouch film, the second housing body 50 may have a configuration in which two aluminum pouch films are located on both sides in the layering direction (Z-axis direction) of the unit cell 10. When the second housing body 50 is an aluminum pouch film, the second housing body 50 may have a configuration in which one aluminum pouch film is folded in two and the unit cell 10 is located therein.

The connection terminals 21 and 22 may be terminals connected to the external terminal in order to take out electric power from the secondary battery 1 or supply electric power to the secondary battery 1. The connection terminals 21 and 22 may protrude from the inside to the outside of the second housing body 50. The material of the connection terminals 21 and 22 may be, for example, copper, aluminum, or nickel. Each of the connection terminals 21 and 22 may have a thickness from 50 µm to 500 µm, and a thickness of 200 µm, for example. The connection terminals 21 and 22 may be subjected to a surface treatment for improving adhesion to an adhesive member (not illustrated). The adhesive member adheres the connection terminals 21 and 22 to the second housing body 50 located above and below the connection terminals 21 and 22, in order to determine the positions of the connection terminals 21 and 22 with respect to the second housing body 50.

FIG. 2 is a perspective view illustrating an appearance of the unit cell 10. As illustrated in FIG. 2, the unit cell 10 may include an electrode body 14 and a first housing body 15 (housing body). The electrode body 14 may have a sheet-like shape. The electrode body 14 having a sheet-like shape may include a positive electrode 11 and a negative electrode 12.

The first housing body 15 may house the electrode body 14. A peripheral edge portion of the first housing body 15 may be sealed in a state in which the first housing body 15 houses the electrode body 14. When a plurality of first housing bodies 15 each housing the electrode body 14 are layered, the plurality of first housing bodies 15 may be adhered to each other by an adhesive layer (not illustrated). The material of the first housing body 15 may be, for example, film-shaped polyethylene terephthalate (PET) or nylon. More specifically, for example, two first housing bodies 15 may be located on both sides in the layering direction (Z-axis direction) of the unit cell 10. A base material of the first housing body 15 may have a thickness from 10 µm to 40 µm, for example, and a thickness of 25 µm, for example. The material of the adhesive layer may be, for example, polypropylene or polyethylene.

The first housing body 15 may be, for example, transparent. FIG. 2 is a view illustrating a state in which by using the transparent first housing body 15 in the unit cell 10, the electrode body 14 can be seen through the first housing body 15.

The first housing body 15 may have a cutout portion 16. For example, the cutout portion 16 may be provided in each of the first housing body 15 on the positive electrode 11 side and the first housing body 15 on the negative electrode 12 side. By providing the cutout portion 16 as an unsealed portion in a part of the unit cell 10, a gas generated by a decomposition reaction of an electrolytic solution or a small amount of moisture in the unit cell 10 can be released to the outside of the unit cell 10. The unit cell 10 may have a configuration in which a portion on the positive electrode 11 side and a portion on the negative electrode 12 side are exposed from the first housing body 15 by providing the cutout portion 16. A portion on the positive electrode 11 side and a portion on the negative electrode 12 side may not be exposed from the first housing body 15. In the latter case, the unit cell 10 may have a configuration in which an internal space on the positive electrode 11 side of the unit cell 10 communicates with an external space of the unit cell 10, and a configuration in which an internal space on the negative electrode 12 side of the unit cell 10 communicates with the external space of the unit cell 10. The first housing body 15 on the negative electrode 12 side may be exposed at the position of the cutout portion 16 on the positive electrode 11 side, and the first housing body 15 on the positive electrode 11 side may be exposed at the position of the cutout portion 16 on the negative electrode 12 side.

The positive electrode 11 may have an exposed portion 11e exposed from the first housing body 15. The negative electrode 12 may have an exposed portion 12e exposed from the first housing body 15. Specifically, the exposed portions 11e and 12e protrude from the first housing body 15. The connection terminals 21 and 22 may be electrically connected to the exposed portions 11e and 12e, respectively, by ultrasonic welding, laser welding, or resistance welding, for example. Details of the positive electrode 11 and the negative electrode 12 are described below.

The secondary battery 1 may have a configuration in which the unit cell 10 including the positive electrode 11 and the negative electrode 12 housed in the first housing body 15 is further housed in the second housing body 50. With this configuration, the electrode bodies 14 are doubly housed, so that the stability of the secondary battery 1 can be enhanced. The second housing body 50 may be housed in another housing body. However, the secondary battery 1 may include the positive electrode 11 and the negative electrode 12, and may be housed in at least one housing body.

In a first embodiment, the secondary battery 1 has a configuration in which the plurality of unit cells 10 are layered, for example, a configuration in which ten layers of the unit cells 10 are layered. However, the secondary battery 1 according to the present disclosure may include a plurality of layers different from ten layers of the unit cells 10 or may include only one layer of the unit cell 10. When the secondary battery 1 includes a plurality of layers of the unit cells 10, the unit cells 10 may be layered. In plan view of the secondary battery 1 illustrated in FIG. 1, a portion other than the connection terminals 21 and 22 may have a substantially rectangular shape or may have a different shape. In plan view of the unit cell 10 illustrated in FIG. 2, a portion other than the exposed portions 11e and 12e may have a substantially rectangular shape or may have a different shape.

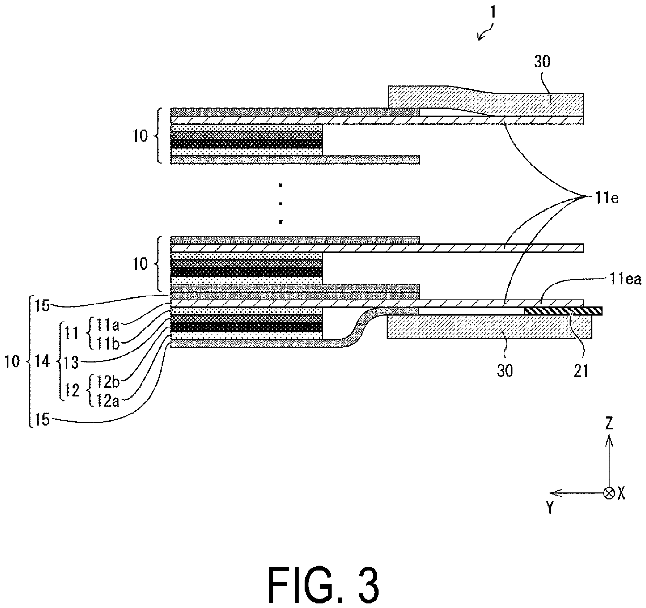

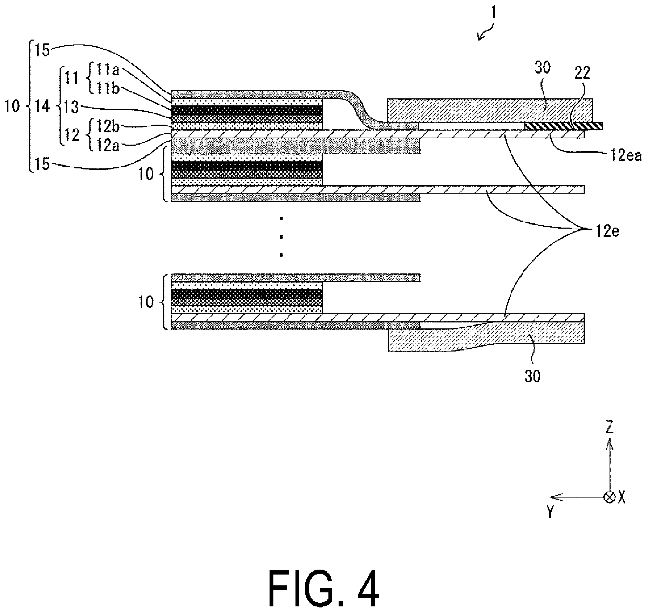

FIG. 3 is an exploded model view of a cross section taken along line III-III of FIG. 1. FIG. 4 is an exploded model view of a cross section taken along line IV-IV of FIG. 1. For the sake of simplicity, FIGs. 3 and 4 do not illustrate the second housing body 50. FIGs. 3 and 4 mainly illustrate a positional relationship of each component. Therefore, the relationship between the thicknesses of the components is not necessarily as illustrated in FIGs. 3 and 4.

As illustrated in FIGs. 3 and 4, the secondary battery 1 may further include a first protective member 30.
The first protective member 30 may protect a first connecting portion that electrically connects the exposed portions 11e exposed from the first housing bodies 15 of each unit cell 10, and a second connecting portion that electrically connects the exposed portions 12e exposed from the first housing bodies 15 of each unit cell 10. The exposed portions 11e and the exposed portions 12e may be connected to each other by, for example, ultrasonic welding, laser welding, or resistance welding, respectively. Although the exposed portions 11e of the positive electrode 11 and the exposed portions 12e of the negative electrode 12 are not connected to each other in FIGs. 3 and 4, the exposed portions 11e and the exposed portions 12e are actually connected to each other as described above.

The material of the first protective member 30 may be, for example, film-like polyolefin or polyimide. The first protective member 30 may be adhered to the exposed portions 11e and 12e by an adhesive layer (not illustrated). The material of the adhesive layer in the first protective member 30 may be a material not easily eluted in an electrolytic solution (electrolyte). The material of the adhesive layer may be, for example, an acrylic adhesive.

In the present embodiment, the first protective member 30 may cover from the first connecting portion and the second connecting portion to a part of the first housing body 15. Thus, when stresses are generated in the exposed portion 11e or 12e, the stresses are less likely to be concentrated, so that the possibility that the exposed portion 11e or 12e is damaged or broken in the vicinity of the first connecting portion and the second connecting portion can be reduced. However, the first protective member 30 may protect at least the first connecting portion and the second connecting portion, and the first protective member 30 may not necessarily cover from the first connecting portion and the second connecting portion to the first housing body 15.

As illustrated in FIGs. 3 and 4, the positive electrode 11 may have an electrode conductor 11a and a positive electrode active material layer 11b. The negative electrode 12 may have an electrode conductor 12a and a negative electrode active material layer 12b.

The electrode conductor 11a may be, for example, an aluminum foil. The electrode conductor 11a may have a thickness from 5 µm to 25 µm, and a thickness of 10 µm, for example. The electrode conductor 12a may be, for example, a copper foil. The electrode conductor 12a may have a thickness from 5 µm to 25 µm, and a thickness of 10 µm, for example.

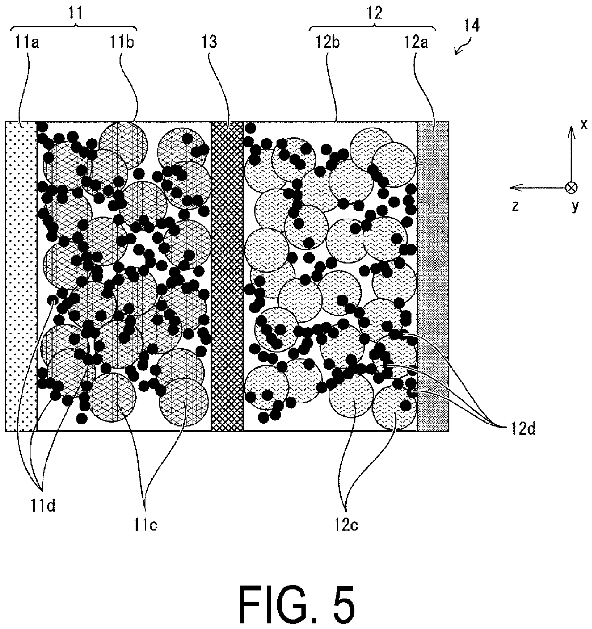

FIG. 5 is a cross-sectional view illustrating a specific structure of the electrode body 14. As illustrated in FIG. 5, the positive electrode active material layer 11b (active material layer) may be a layer of a positive electrode material being a mixture of a positive electrode active material 11c (electrode active material) and a conductive additive 11d. The negative electrode active material layer 12b (active material layer) may be a layer of a negative electrode material being a mixture of a negative electrode active material 12c (electrode active material) and a conductive additive 12d. The positive electrode active material 11c may be, for example, lithium cobalt oxide, lithium nickel oxide, lithium iron phosphate, or lithium manganese oxide. The negative electrode active material 12c may be, for example, graphite or lithium titanate. The conductive additives 11d and 12d may each be, for example, carbon black or acetylene black. However, the positive electrode active material 11c, the negative electrode active material 12c, and the conductive additives 11d and 12d are not limited thereto.

The positive electrode material may have a so-called clay-like property in which an electrolytic solution is mixed into a mixture composed of the positive electrode active material 11c and the conductive additive 11d. The negative electrode material may have a so-called clay-like property in which an electrolytic solution is mixed into a mixture composed of the negative electrode active material 12c and the conductive additive 12d. The positive electrode 11 may be formed by applying a positive electrode material to the electrode conductor 11a. The negative electrode 12 may be formed by applying a negative electrode material to the electrode conductor 12a.

The electrolytic solution is obtained by dissolving a lithium salt as an electrolyte in a non-aqueous solvent. The nonaqueous solvent may be a carbonate-based solvent. The carbonate-based solvent may be γ-butyrolactone, ethylene carbonate, or both γ-butyrolactone and ethylene carbonate. The carbonate-based solvent may contain another solvent as long as it contains at least one of γ-butyrolactone and ethylene carbonate. Examples of other solvents include propylene carbonate, dimethyl carbonate, dimethoxyethane, diethyl carbonate, tetrahydrofuran, and triethylene glycol dimethyl ether. The electrolyte may be lithium hexafluorophosphate or lithium bis (fluorosulfonyl) imide (LiFSI).

The electrode body 14 may further include a separator 13. The positive electrode 11, the negative electrode 12, and the separator 13 may have a positional relationship such that the positive electrode active material layer 1 1b and the negative electrode active material layer 12b are in contact with the separator 13. That is, the unit cell 10 may have a structure in which the positive electrode 11 and the negative electrode 12 are layered with the separator 13 interposed therebetween. The separator 13 may serve as an insulating member that insulates the positive electrode 11 and the negative electrode 12. As the separator 13, for example, a sheet-like nonwoven fabric or porous material may be used.

When a porous material is used as the separator 13, specifically, a porous film made of a thermoplastic resin having a melting point of about 80°C to 140°C may be used. As the thermoplastic resin, for example, a polyolefin-based polymer such as polypropylene or polyethylene, or polyethylene terephthalate may be used.

### Structure of Negative Electrode 12

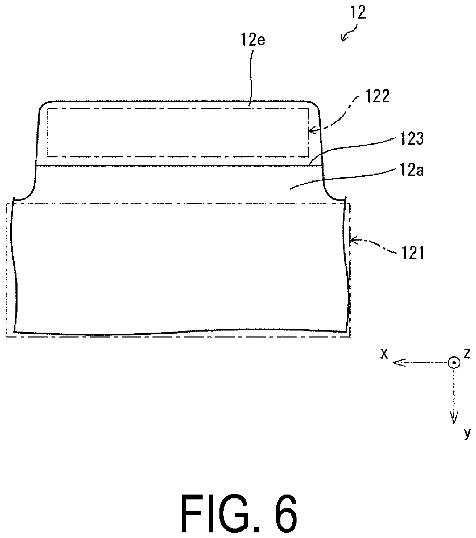

FIG. 6 is a plan view illustrating the structure of the negative electrode 12 included in the electrode body 14 in the vicinity of the exposed portion 12e. For the sake of visibility, FIG. 6 does not illustrate the negative electrode active material layer 12b. As illustrated in FIG. 6, in the negative electrode 12, the electrode conductor 12a has a first region 121 and a second region 122. The first region 121 is a region where the negative electrode active material layer 12b is located. The first region 121 may be substantially the entire surface of the electrode conductor 12a on the side where the negative electrode active material layer 12b is located, except for the exposed portion 12e. The second region 122 is a region to which the connection terminal 22 can be electrically connected. The second region 122 is a partial region on the exposed portion 12b on the side where the negative electrode active material layer 12e is located.

In the following description, the surface of the electrode conductor 12a on the side where the negative electrode active material layer 12b is located is simply referred to as the surface of the electrode conductor 12a. As illustrated in FIG. 6, a resistance portion 123 is disposed between the first region 121 and the second region 122 on the surface of the electrode conductor 12a. That is, the electrode body 14 includes the resistance portion 123. The resistance portion 123 has a linear shape when the electrode conductor 12a is seen in plan view. The linear shape is a shape having a length and a width that can be substantially regarded as a line. The resistance portion 123 exhibits a higher resistance than the first region 121 with respect to the movement of the electrolytic solution included in the negative electrode active material layer 12b along the surface of the electrode conductor 12a. The resistance portion 123 is located closer to the second region 122 side than to the first region 121 of the electrode conductor 12a. The resistance portion 123 having a linear shape may have a width of 20 µm or more, for example, 50 µm.

The resistance portion 123 may be located to be interposed on an arbitrary path through which the electrolytic solution moves on the surface of the electrode conductor 12a from the first region 121 to the second region 122. For example, as illustrated in FIG. 6, the resistance portion 123 may be disposed between both ends of the exposed portion 12e in the left-right direction when the direction from the first region 121 toward the second region 122 is a front side, on the first region 121 side with respect to the second region 122. In this case, regardless of a path through which the electrolytic solution moves from the first region 121 to the second region 122, the resistance portion 123 is interposed on the path. By disposing the resistance portion 123 in this manner, the resistance against the movement of the electrolytic solution from the first region 121 to the second region 122 can be increased regardless of the movement path of the electrolytic solution. The position of the resistance portion 123 may be separated from an end portion of the first region 121 facing the second region 122 by a distance equal to or greater than 3 mm.

However, the resistance portion 123 may not be located to be interposed on all paths through which the electrolytic solution can move from the first region 121 to the second region 122. That is, the resistance portion 123 may be located to be present on at least a part of a path through which the electrolytic solution moves from the first region 121 to the second region 122. Since the resistance portion 123 is located in this manner, resistance against the movement of the electrolytic solution is increased in the path in which the resistance portion 123 is interposed.

The resistance portion 123 is not necessarily a region different from the second region 122, and may be included in the second region 122. In this case, the resistance portion 123 may exhibit a higher resistance than the second region 122 with respect to the movement of the electrolytic solution included in the negative electrode active material layer 12b along the surface of the electrode conductor 12a.

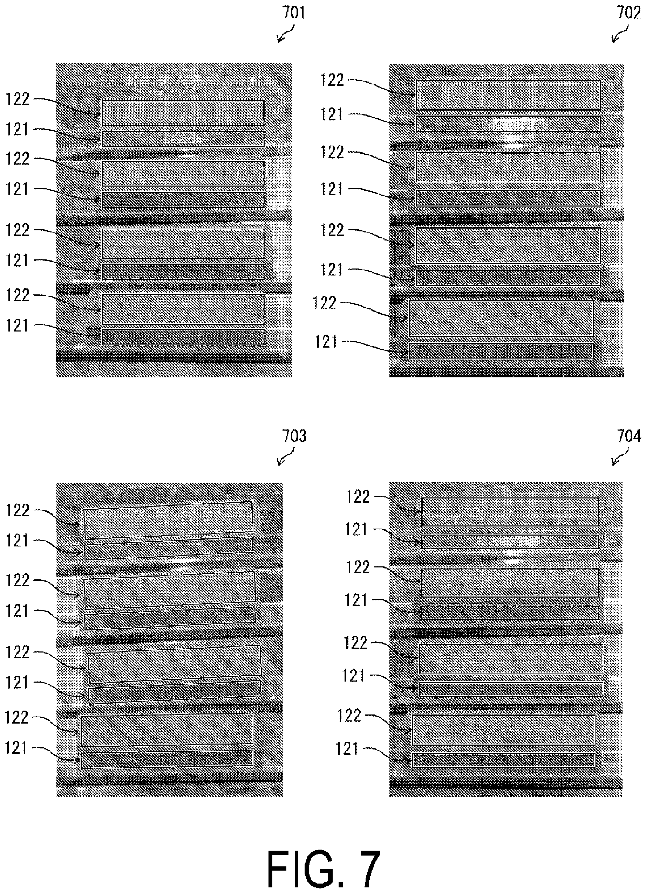

FIG. 7 is a view illustrating the movement of the electrolytic solution in the electrode conductor 12a of the negative electrode 12 not including the resistance portion 123. In FIG. 7, the movement of the electrolytic solution from the first region 121 side to the second region 122 side is illustrated for each time in four examples of the negative electrode 12. For the four examples of the negative electrode 12, no difference exists in manufacturing conditions or the like. In FIG. 7, reference numeral 701 denotes an image showing a state immediately after the negative electrode active material layer 12b is formed. In FIG. 7, reference numeral 702 denotes an image showing a state after one hour has passed from the state of reference numeral 701. In FIG. 7, reference numeral 703 denotes an image showing a state after four hours have passed from the state of reference numeral 701. In FIG. 7, reference numeral 704 denotes an image showing a state after 12 hours have elapsed from the state of reference numeral 701.

In each image, a region where the color is dark is a region where the electrolytic solution moves. As indicated by reference numeral 701 in FIG. 7, the movement of the electrolytic solution occurs immediately after the negative electrode active material layer 12b is formed. Subsequently, as indicated by reference numerals 702 to 704 in FIG. 7, when the negative electrode 12 does not include the resistance portion 123, the movement of the electrolytic solution proceeds with the elapse of time in any of the examples. At reference numeral 704 in FIG. 7, the electrolytic solution reaches the second region 122 in any of the four examples. When the electrolytic solution reaches the second region 122 in which the connection terminal 22 is welded to the electrode conductor 12a due to the movement of the electrolytic solution, the strength of the welding of the connection terminal 22 to the second region 122 decreases, resulting in the possibility that connection failure occurs.

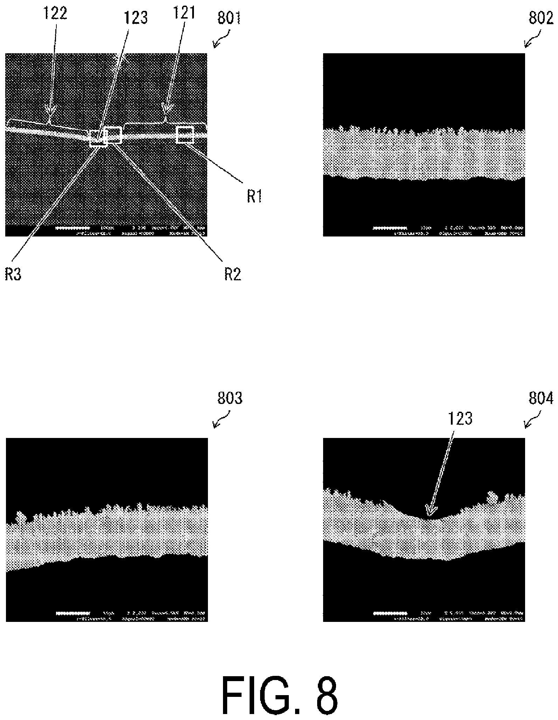

FIG. 8 is a view illustrating an example of a cross section of the electrode conductor 12a. In FIG. 8, reference numeral 801 denotes a photograph of a cross-section of the electrode conductor 12a in a wide range including the resistance portion 123, a part of the first region 121, and a part of the second region 122, the first region 121 and the second region 122 being located on both sides of the resistance portion 123. In FIG. 8, reference numeral 802 denotes an enlarged view of a region R1 in reference numeral 801. In FIG. 8, reference numeral 803 denotes an enlarged view of a region R2 in reference numeral 801. In FIG. 8, reference numeral 804 denotes an enlarged view of a region R3 in reference numeral 801. The region R1 is a region of the first region 121 separated from the resistance portion 123. The region R2 is a region between the first region 121 and the resistance portion 123. The region R3 is a region including the resistance portion 123.

As indicated by reference numeral 802 in FIG. 8, the surface of the electrode conductor 12a in the first region 121 is processed (roughened) to be rough in order to facilitate application of the negative electrode active material 12c and the like. For example, the electrode conductor 12a may have a thickness of 5 µm to 25 µm. The surface of the electrode conductor 12a may have an arithmetic mean roughness Ra of 0.15 µm to 0.6 µm. The surface of the electrode conductor 12a may have a maximum height Rz of 1.2 µm to 5 µm. As indicated by reference numeral 803 in FIG. 8, the surface of the electrode conductor 12a is processed to be rough also in the region R2. On such a surface, resistance against the movement of the electrolytic solution included in the negative electrode active material layer 12b is reduced by a capillary phenomenon caused by unevenness on the surface. Consequently, on such a surface, the electrolytic solution included in the negative electrode active material layer 12b easily moves to the second region 122 side.

As indicated by reference numeral 804 in FIG. 8, the resistance portion 123 may include a region having a smaller surface roughness than the first region 121 on the surface of the electrode conductor 12a. Since the resistance portion 123 includes such a region, the influence of the capillary phenomenon is reduced in the resistance portion 123. Consequently, the resistance portion 123 exhibits a higher resistance than the first region 121 with respect to the movement of the electrolytic solution along the surface of the electrode conductor 12a. That is, in the region of the resistance portion 123 having a smaller surface roughness than the first region 121, the electrolytic solution included in the negative electrode active material layer 12b is less likely to move to the second region 122 side.

In the following description, a region of the resistance portion 123 having a smaller surface roughness than the first region 121 is referred to as a roughness reduction region. The entire resistance portion 123 may be the roughness reduction region, or only a part of the resistance portion 123 may be the roughness reduction region. When only a part of the resistance portion 123 is the roughness reduction region, a portion other than the roughness reduction region of the resistance portion 123 may have another configuration for exhibiting a higher resistance against the movement of the electrolytic solution than the first region 121. The portion other than the roughness reduction region of the resistance portion 123 may have, for example, a configuration described in a variation to be described below.

The arithmetic average roughness Ra in the roughness reduction region may be, for example, 0.05 µm to 0.1 µm. The maximum height Rz in the roughness reduction region may be 0.3 µm to 1.0 µm. When the roughness reduction region has such roughness, resistance of the resistance portion 123 against the movement of the electrolytic solution along the surface of the electrode conductor 12a becomes sufficiently high.

In the process of providing the roughness reduction region on the surface of the electrode conductor 12a, the thickness of the electrode conductor 12a may vary. Specifically, the electrode conductor 12a may be thinner in the roughness reduction region. When the electrode conductor 12a becomes thinner, the strength of the electrode conductor 12a decreases.

When the thickness of the electrode conductor 12a in the roughness reduction region varies, a difference occurs between the thickness of the electrode conductor 12a in the first region 121 and the thickness of the electrode conductor 12a in the roughness reduction region. The difference between the thickness of the electrode conductor 12a in the first region 121 and the thickness of the electrode conductor 12a in the roughness reduction region may be 20% or less of the thickness of the electrode conductor 12a in the first region 121. The thickness of the electrode conductor 12a in the roughness reduction region may not vary. In such a case, the difference between the thickness of the electrode conductor 12a in the first region 121 and the electrode conductor 12a in the roughness reduction region is 0% of the thickness of the electrode conductor 12a in the first region 121. That is, the variation in the thickness in the process of providing the roughness reduction region on the surface of the electrode conductor 12a may be 20% or less of the thickness of the electrode conductor 12a in the first region 121. This can reduce a decrease in the strength of the electrode conductor 12a in the roughness reduction region. Such a roughness reduction region may be provided by, for example, pressing the surface of the electrode conductor 12a by using a roller or the like.

As illustrated in FIG. 8, the electrode conductor 12a may be bent in a convex shape on the side opposite to the surface of the electrode conductor 12a in the resistance portion 123. When the electrode conductor 12a has such a shape, the resistance portion 123 serves as a liquid reservoir of the electrolytic solution. That is, the electrolytic solution is less likely to move from the resistance portion 123 to the outside. Consequently, the resistance of the resistance portion 123 against the movement of the electrolytic solution can be further increased.

As described above, in the electrode body 14, since the negative electrode 12 includes the resistance portion 123, the movement of an electrolytic solution from the first region 121 to the second region 122 on the surface of the electrode conductor 12a can be reduced. Consequently, the electrode body 14 can reduce the possibility of occurrence of connection failure between the electrode conductor 12a and the connection terminal 22 welded to the second region 122 due to adhesion of the electrolytic solution to the second region 122.

The above has described an example in which the electrode body 14 includes the resistance portion 123 on the surface of the electrode conductor 12a. However, the electrode body 14 may also include the resistance portion 123 on the surface of the electrode conductor 11a.

In particular, when the surface of the electrode conductor 11a is roughened, the influence of a capillary phenomenon on the movement of the electrolytic solution is increased also on the surface of the electrode conductor 11a. That is, the electrolytic solution can reach the second region 122 on the surface of the electrode conductor 11a. When the electrode body 14 includes the resistance portion 123 on the surface of the electrode conductor 11a, the movement of the electrolytic solution can be reduced even in the electrode conductor 11a having a roughened surface.

### First Variation

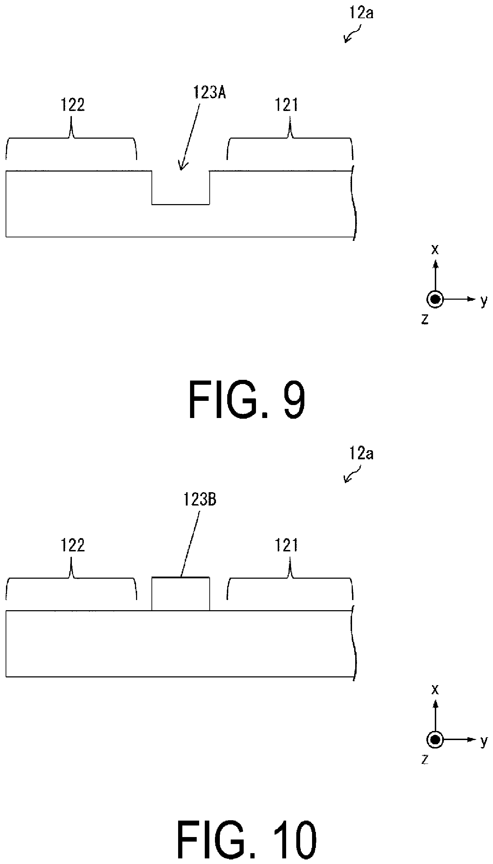

FIG. 9 is a cross-sectional view schematically illustrating a resistance portion 123A according to a first variation of the resistance portion 123. As illustrated in FIG. 9, the resistance portion 123A may be a recessed portion in the surface of the electrode conductor 12a. The resistance portion 123A serves as a liquid reservoir of the electrolytic solution. Consequently, such a resistance portion 123A also exhibits a higher resistance than the first region 121 with respect to movement of the electrolytic solution along the surface of the electrode conductor 12a. The resistance portion 123A may be provided by, for example, drilling the surface of the electrode conductor 12a with a laser. The resistance portion 123A may have a depth of 0.5 µm or more. A difference between the thickness of the electrode conductor 12a in the first region 121 and the electrode conductor 12a in the resistance portion 123A may be 20% or less of the thickness of the electrode conductor 12a in the first region 121. The vicinity of the resistance portion 123A may be higher than the other regions of the electrode conductor 12a. That is, the first region 121 and the second region 122 closest to the resistance portion 123A may be thicker than the electrode conductor 12a in the first region 121 separated from the resistance portion 123A.

A bottom portion or at least one lateral portion of the resistance portion 123A may have a smaller surface roughness than the first region 121. When the bottom portion or the lateral portion of the resistance portion 123A has such surface roughness, the resistance portion 123A exhibits a higher resistance against the movement of the electrolytic solution along the surface of the electrode conductor 12a. Consequently, the possibility of occurrence of connection failure between the connection terminal 22 and the electrode conductor 12a can be further reduced. When the bottom portion or the lateral portion of the resistance portion 123A has a smaller surface roughness than the first region 121, the specific surface roughness of the bottom portion or the lateral portion may be the same as the surface roughness of the roughness reduction region described above. The bottom portion or at least one lateral portion of the resistance portion 123A may include a void portion inside the surface thereof. The void portion is formed by, for example, taking in air around a portion heated by a laser in a process of cooling the portion after the resistance portion 123A is formed by the laser, or by deformation accompanying expansion and shrinkage of the electrode conductor 12a. An additional recessed portion may be formed on the surface of the electrode conductor 12a at the bottom portion or at least one lateral portion of the resistance portion 123A.

### Second Variation

FIG. 10 is a cross-sectional view schematically illustrating a resistance portion 123B according to a second variation of the resistance portion 123. As illustrated in FIG. 10, the resistance portion 123B may be a member, different from the electrode conductor 12a, having a thickness, and located on the surface of the electrode conductor 12a. In this case, the resistance portion 123B blocks the movement of the electrolytic solution along the surface of the electrode conductor 12a, and thus exhibits a higher resistance against the movement than the first region 121.

A material constituting the resistance portion 123B in the present variation may be any material as long as the material can be joined to the surface of the electrode conductor 12a in a liquid-tight manner and does not allow permeation of the electrolytic solution. Specific examples of the material constituting the resistance portion 123B include styrene-butadiene rubber.

### Third Variation

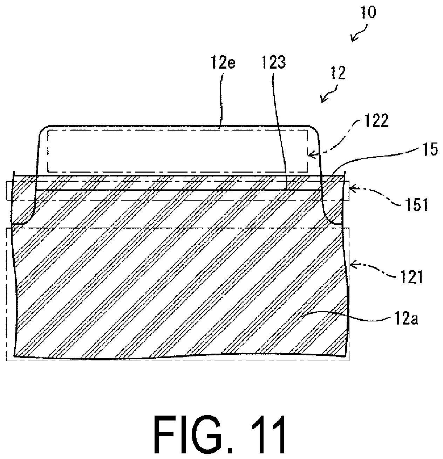

FIG. 11 is a plan view illustrating a variation of the unit cell 10 including the negative electrode 12. In the present variation, the resistance portion 123 includes a region (roughness reduction region) having a smaller surface roughness than the first region 121.

As described above, in the unit cell 10, the first housing body 15 may house the electrode body 14. At this time, the exposed portion 12e of the electrode conductor 12a protrudes from the first housing body 15. As described above, the peripheral edge portion of the first housing body 15 may be sealed in a state in which the first housing body 15 houses the electrode body 14. In the following description, a portion where the first housing body 15 is sealed along the side of the first housing body 15 from which the exposed portion 12e protrudes is referred to as a sealing portion 151.

In the first embodiment, the position of the sealing portion 151 is not particularly limited, and may be located between the first region 121 and the resistance portion 123, for example. On the other hand, as illustrated in FIG. 11, in the present variation, the sealing portion 151 may be located on the resistance portion 123. The degree of adhesion of the sealing portion 151 to the roughness reduction region included in the resistance portion 123 is higher than the degree of adhesion of the sealing portion 151 to a region other than the roughness reduction region. Since the sealing portion 151 is in close contact with the roughness reduction region, the resistance against the movement of the electrolytic solution along the surface of the electrode conductor 12a is higher than the resistance when the sealing portion 151 is not in close contact with the roughness reduction region. Consequently, in the resistance portion 123 including the roughness reduction region, the resistance of the resistance portion 123 against the movement of the electrolytic solution along the surface of the electrode conductor 12a can be further increased as compared with a case where the sealing portion 151 is not located on the resistance portion 123.

As described above, the electrode body 14 and the unit cell 10 according to the present disclosure can reduce the possibility of occurrence of connection failure between the electrode conductor 12a and the connection terminal 22 welded to the second region 122 due to adhesion of an electrolytic solution to the second region 122. Therefore, the possibility of occurrence of a defective secondary battery 1 can be reduced. Consequently, energy and resources consumed for manufacturing a defective secondary battery 1 can be saved, thereby contributing to achievement of sustainable development goals (SDGs).

### Supplementary Note

The invention according to the present disclosure has been described above on the basis of various drawings and examples. However, the invention according to the present disclosure is not limited to the above-mentioned embodiments. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, note that it is easy for a person skilled in the art to make various modifications or modifications based on the present disclosure. Note that these variations or modifications are included within the scope of the present disclosure.

### REFERENCE SIGNS

10 Unit cell (power storage element)
11a Electrode conductor
11b Positive electrode active material layer (electrode active material layer)
11c Positive electrode active material (electrode active material)
12a Electrode conductor
12b Negative electrode active material layer (electrode active material layer)
12c Negative electrode active material (electrode active material)
121 First region
122 Second region
123 Resistance portion
14 Electrode body
15 First housing body (housing body)
151 Sealing portion

## Claims

1. An electrode body, comprising:
an active material layer comprising an electrode active material and an electrolytic solution;
an electrode conductor comprising (i) a first region where the active material layer is located and (ii) a second region being a region different from the first region and being a region to which a connection terminal is electrically connectable; and
a resistance portion of the electrode conductor, the resistance portion being located closer to a side of the second region than the first region, the resistance portion exhibiting a higher resistance than the first region with respect to movement of the electrolytic solution along a surface of the electrode conductor on a side where the active material layer is located.

2. The electrode body according to claim 1, wherein the resistance portion comprises a region on the surface of the electrode conductor, the region having a smaller surface roughness than the first region.

3. The electrode body according to claim 2, wherein a difference between a thickness of the electrode conductor in the first region and a thickness of the electrode conductor in the region of the resistance portion is 20% or less of the thickness of the electrode conductor in the first region, the region of the resistance portion having a smaller surface roughness than the first region.

4. The electrode body according to any one of claims 1 to 3, wherein the resistance portion is a part of the electrode conductor, and
the electrode conductor is bent in a convex shape on a side opposite to the surface in the resistance portion.

5. The electrode body according to claim 1 or 2, wherein the resistance portion is a recessed portion in the surface of the electrode conductor.

6. The electrode body according to claim 1 or 2, wherein the resistance portion is a member, different from the electrode conductor, having a thickness, and located on the surface of the electrode conductor.

7. The electrode body according to any one of claims 1 to 6, wherein the resistance portion is located to be interposed on an arbitrary path through which the electrolytic solution moves on the surface of the electrode conductor from the first region to the second region.

8. A power storage element comprising the electrode body according to any one of claims 1 to 7.

9. The power storage element according to claim 8, wherein the resistance portion comprises a region on the surface of the electrode conductor, the region having a smaller surface roughness than the first region,
the power storage element comprises a housing body that houses the electrode body,
a part of the electrode conductor protrudes from the housing body, and
a sealing portion of the housing body sealed in a state of housing the electrode body is located on the resistance portion.
